(19) Europäisches Patentamt / European Patent Office / Office européen des brevets

(11) **EP 1 845 660 B1**

(12) **EUROPEAN PATENT SPECIFICATION**

(45) Date of publication and mention
of the grant of the patent:
**29.08.2012  Bulletin 2012/35**

(51) Int Cl.:
*H04L 12/28* (2006.01)

(21) Application number: **06425259.6**

(22) Date of filing: **12.04.2006**

(54) **Method for aggregating and transmitting sensor signals**

Verfahren zur Zusammensetzung und zum Senden von Sensorsignalen

Procédé pour l'aggrégation et la transmission de signaux de capteurs

(84) Designated Contracting States:
**DE FR GB IT**

(43) Date of publication of application:
**17.10.2007  Bulletin 2007/42**

(73) Proprietor: **STMicroelectronics Srl**
**20864 Agrate Brianza (IT)**

(72) Inventors:
• **Visalli, Giuseppe**
  **98121 Messina (IT)**
• **Pappalardo, Francesco**
  **95047 Paterno (Catania) (IT)**

(74) Representative: **Carangelo, Pierluigi et al**
**Jacobacci & Partners S.p.A.**
**Via delle Quattro Fontane, 15**
**00184 Roma (IT)**

(56) References cited:
**US-A1- 2004 026 510**

• **SINHA A ET AL: "Algorithmic transforms for efficient energy scalable computation" LOW POWER ELECTRONICS AND DESIGN, 2000. ISLPED '00. PROCEEDINGS OF THE 2000 INTERNATIONAL SYMPOSIUM ON JULY 26-27, 2000, PISCATAWAY, NJ, USA,IEEE, 26 July 2000 (2000-07-26), pages 31-36, XP010517300 ISBN: 1-58113-190-9**
• **HEINZELMAN W R ET AL: "Energy-scalable algorithms and protocols for wireless microsensor networks" ACOUSTICS, SPEECH, AND SIGNAL PROCESSING, 2000. ICASSP '00. PROCEEDINGS. 2000 IEEE INTERNATIONAL CONFERENCE ON 5-9 JUNE 2000, PISCATAWAY, NJ, USA,IEEE, vol. 6, 5 June 2000 (2000-06-05), pages 3722-3725, XP010505707 ISBN: 0-7803-6293-4**

**Description**

The present invention relates to data acquisition, processing and transmission technical field and in particular is concerned with a processing method for providing an aggregate signal, starting from signals acquired from a set of sensors. The present invention further relates to a data acquisition system using such method.

As it is known, in an ever increasing number of applications it is always more widespread the use of sensors networks for acquiring various kind of data and for transmitting such data to a remote processing unit. Just to mention a few examples, the use of sensors networks has proven itself particularly advantageous in security systems field, in biomedical applications, in environment control field and in transport field. In many applications, the sensors networks used are wireless networks, often referred to by the WSN acronym (Wireless Sensors Network).

It is known that in sensors networks, primarily in wireless networks, the reduced area or volume occupied by circuits or components included in the sensors is a system requirement. For instance, presently in sensors wireless networks are generally used micro-sensors, or MEMS (an acronym of the expression Micro Electro-Mechanical Sensors), realized by COMS technology and in the future one envisages a use of sensors realized by sub-micrometric sophisticated technology CMOS (DSM CMOS).

In sensors networks, primarily in wireless networks, another system restraint is a low energy consumption of the various system parts supplied by a battery, with the purpose to maximize the batteries life.

In sensors networks, and particularly in wireless networks, to limit the energy required to transmit the sensors output provided signals to the remote processing unit, a transmissive technique is known, that envisages to group the sensors provided for acquiring data concerning homogeneous quantities, in such a way as to form groups of sensors. Each of such groups is associated to a local processing unit (that, generally, may be integrated in a sensor of the group), provided for receiving signals outputted by the sensors, processing such signals to form an aggregate signal, and transmitting such aggregate signal to the remote processing unit. The local processing unit generally comprises a micro-controller with very low power dissipation (MCU, Ultra-low-power Micro Controller) adapted to execute the above described operations.

A specific example of the above indicated transmission technique is disclosed in a paper by A. Wang, W. Einzelam and A. P. Chandrakasan entitled "Energy Scalable Protocols for Battery-Operated MicroSensor network" Kluwer Journal of VLSI Signal Processing, pp. 223 - 239, November 2001.

In the above described transmission technique, the aggregate signal is obtained from the local processing unit by a merge (also referred to in the field by the word "beamforming") of signals output by various sensors of the group, exploiting the redundancy present in such signals. In the above cited paper such merge is obtained by adaptive equalization. In different techniques, always belonging to the state of the art, the merge is obtained by a Kalman filtering.

It was noticed that the above described beamforming techniques referring the state of the art demand the local processing unit to execute of remarkable computational complexity processing, such as for instance arithmetic operations in fixed or floating point. This implies a sizeable power consumption in the local processing unit that, in practice is forced to operate as a digital signal processor (DSP).

A further example of a prior art beamforming method based on pre-processing sensors signal by weighing filters is disclosed in SINHA ET AL : "Algorithmic transforms for efficient energy scalable computation" LOW POWER ELECTRONICS AND DESIGN, 2000. ISLPEP '00 PROCEEDINGS OF THE 2000 INTERNATIONAL SYMPOSIUM ON JULY 26-27, 2000, PISCATAWAY, NY, USA, IEEE, 26 July 2000 (2000-07-26), pages 31-36.

The object of the present invention is that of making available a signal processing method, or a beamforming method, for provide an aggregate signal from a plurality of starting signals and that is such as to obviate to the above described shortcomings referring to the known art.

This object is achieved by a processing method as defined in the appended claim 1 in its most general form and in the dependent claims in preferred embodiments.

Are part of the present invention also a computer program product, as defined in claim 14, and a data acquisition system as defined in claim 15.

Further features and advantages of the present invention will be better understood from the following detailed description of its preferred embodiments, given by way of example and therefore in no way limitative in relation to the appended figures, wherein:

- figure 1 shows an exemplary block diagram of a data acquisition system according to the present invention, comprising a sensors network, a local processing unit and a remote processing unit;
- figure 2 shows an exemplary block diagram of the local processing unit of fig. 1;
- figure 3 shows the logic scheme of an swap module of the local processing unit of figure 2;
- figure 4 shows an exemplary block diagram of the remote processing unit of figure 1;
- figure 5 shows a waveform portion of an output signal provided by a sensor and a waveform portion of a signal extracted from the aggregate signal;

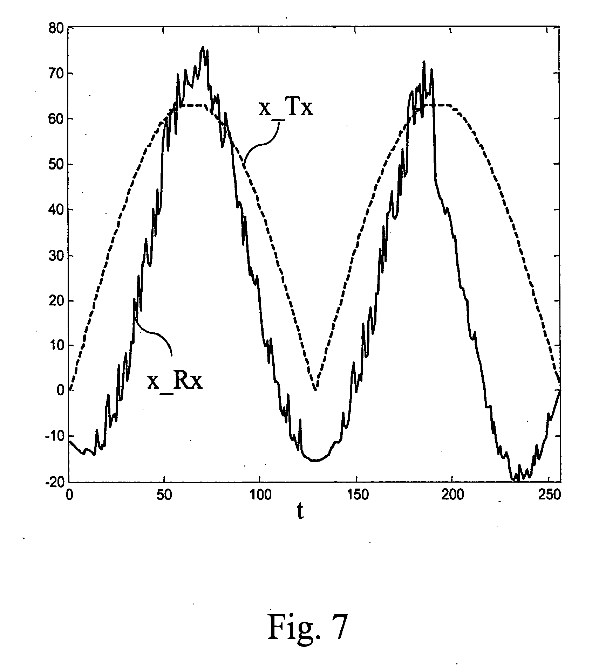

- figures 6 and 7 each show a waveform section of an output signal provided by a sensor and a waveform section of the signal extracted from the aggregate signal following a filtering operation; and
- figure 8 shows waveforms of output signals provided by a group of four sensors and corresponding signals extracted from the aggregate signal $y_{beam}$.

In the figures, same or similar elements are indicated with the same reference numerals.

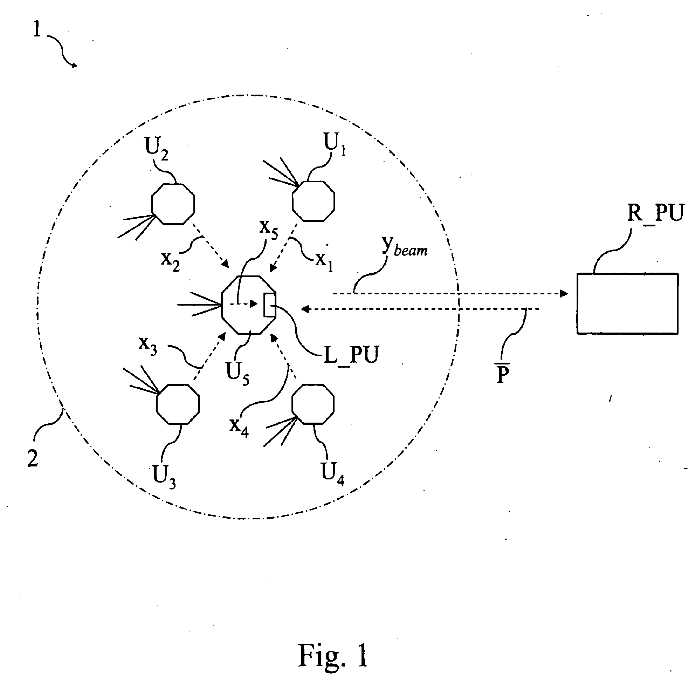

In figure 1 is schematically shown an example of a data acquisition system, generally indicated at 1, comprising a sensors network 2, a local processing unit L_PU and a remote processing unit R_PU.

Sensors network 2 comprises a plurality of sensors $U_1$, ..., $U_5$, for instance micro-sensors (MEMS), that forms together an homogeneous sensors set $U_1$, ..., $U_5$. For the sake of the present description, the term "homogeneous group" of sensors $U_1$, ..., $U_5$ means a group of sensors adapted to measure the same physical quantity to provide in output a respective acquired signal $x_1$, ..., $x_5$ representing such physical quantity. For instance sensors $U_1$, ..., $U_5$ might all be sensors adapted to measure a respective value of room temperature. In another example, sensors $U_1$, ..., $U_5$ might all be sensors adapted to measure a respective value of a same chemical quantity.

Although in figure 1 a sensors network 2 has been schematically shown comprising five sensors $U_1$, ..., $U_5$, the present invention teachings may be extended with no difficulty also to any integer number of sensor, wherein U is at least equal to two.

Preferably, each sensor $U_1$, ..., $U_5$ comprises one or more transducers for acquiring signals $x_1$, ..., $x_5$, representative of the measured physical quantity and comprises further resources for such signal $x_1$, ..., $x_5$ processing and output transmission. More preferably, each sensor $U_1$, ..., $U_5$ comprises analog/digital conversion means, to provide in output said signals $x_1$, ..., $x_5$ as digital signals, that is comprising data in a digital format and having a resolution of $N_{res}$ bits. From now on in the present description we refer, without necessarily introducing any limitation, to the case wherein signals $x_1$, ..., $x_5$ output from sensors $U_1$, ..., $U_5$ are digital signals, having for instance data represented on $N_{res} = 16$ bits.

In one alternative embodiment signals $x_1$, ..., $x_5$ output from sensors network 2 are analog signals destined to be converted in digital signals by suitable analog/digital conversion means provided in the local processing unit L_PU.

Sensors network 2 comprises a local processing unit L_PU which preferably, as in the example illustrated in Figure 1, is integrated in one of said network 2 sensors, in the shown example in sensor $U_5$. In an alternative embodiment, but operatively equivalent, local processing unit L_PU could be separated by each of the sensors $U_1$, ..., $U_5$ of the sensors network 2.

Local processing unit L_PU is such to receive different digital signals $x_1$, ..., $x_5$ acquired and provided in output from network 2 sensors $U_1$, ..., $U_5$.

Local processing unit L_PU comprises processing means for processing digital signals $x_1$, ..., $x_5$ provided from sensors $U_1$, ..., $U_5$ and to form, starting from such signals, an aggregate digital signal $y_{beam}$ to be transmitted to the remote processing unit R_PU. Preferably, local processing unit L_PU comprises processing means in the form of a low dissipation micro-controller.

In the most preferred embodiment of figure 1, sensors network 2, and more generally data acquisition system 1, is of a wireless type. In this case, in practice, data transmission among different entities constituting network 2, or more generally data acquisition system 1, takes place by free space propagation of radio frequency signals. In alternative embodiments, such transmission might take place providing wired connections between at least some of different network/system entities. For instance, there may be proposed wired connections between sensors $U_1$, ..., $U_4$ and sensor $U_5$, or more generally between each sensors network 2 sensors $U_1$, ..., $U_5$ and a the local processing unit L_PU.

For the digital signals $x_1$, ..., $x_5$ transmission to local processing unit L_PU it is possible to envisage indifferently various type access modes. For instance, it is possible for such transmission to envisage for each signal $x_1$, ..., $x_5$ a dedicated frequency channel (FDMA) or as an alternative envisage a time sharing multiple access (TDMA) of different signals $x_1$, ..., $x_5$ to a single channel (TDMA) or even envisage a mixed system FDMA/TDMA.

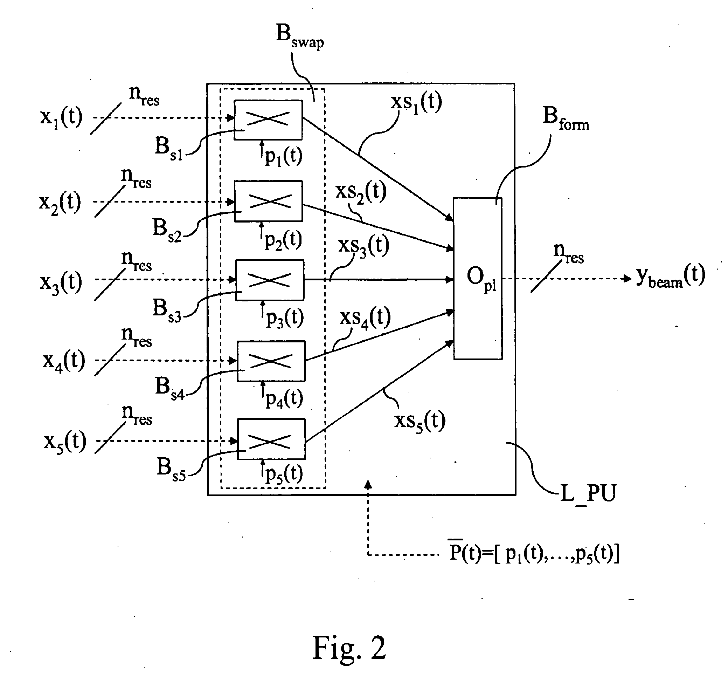

In figure 2 is shown a block diagram of a particularly preferred embodiment of local processing unit L_PU, in this example integrated in one of the homogeneous sensors $U_1$, ..., $U_5$ set. Local processing unit L_PU is such to receive in input digital signals $x_1$, ..., $x_5$ provided from sensors and comprises processing means $B_{swap}$, $B_{form}$ for forming an aggregate signal $Y_{beam}$.

Processing means $B_{swap}$, $B_{form}$ comprise a swap block $B_{swap}$ adapted to modify signals $x_1$, ..., $x_5$ received in input exchanging the data format of each said signals from a first format to a second format. In figure 2 by $x_1(t)$, ..., $x_5(t)$ are indicated at clock cycle t digital data in the first format of signals $x_1$, ..., $x_5$ and by $xs_1(t)$, ..., $xs_5(t)$ are indicated at clock cycle t digital data in the second format of signals $xs_1$, ..., $xs_5$.

Advantageously, each data $xs_1(t)$, ..., $xs_5(t)$ in the second format is obtained from a respective data in the first format $x_1(t)$, ..., $x_5(t)$ by a permutation operation such as to permute the bits position within each date based upon a permutation scheme $p_1(t)$, ..., $p_5(t)$ associated with data $x_1(t)$, ..., $x_5(t)$ and with the specific digital signal $x_1$, ..., $x_5$ comprising such data $x_1(t)$, ..., $x_5(t)$.

As may be noted by a coordinated observation of figures 1 and 2, in a particularly advantageous embodiment,

the permutation schemes $p_1(t)$, ..., $p_5(t)$ are selected by the remote processing unit R_PU and transmitted to the local processing unit L_PU trough at least one signal $\overline{P}$.

In figure 2 specific example, only by way of example, the swap block $B_{swap}$ has been shown as formed by a plurality of swap modules $B_{s1}$, $B_{s2}$, $B_{s3}$, $B_{s4}$, $B_{s5}$, each assigned to process a respective input signal $x_1$, ..., $x_5$. In an alternative embodiment, swap block $B_{swap}$ may be implemented through a single processing unit shared among all signals $x_1$, ... , $x_5$.

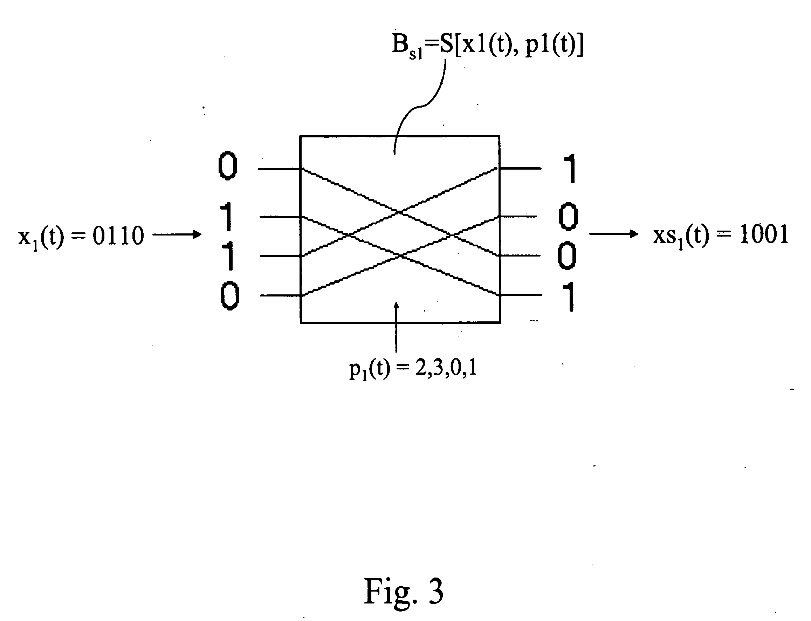

In figure 3 is shown the logic scheme of a swap module logic scheme, and particularly of swap module $B_{s1}$ provided for processing signal $x_1$. Only for illustration simplification, the input data $x_1(t)$ (or first format data) at clock cycle t was represented as a data having a resolution equal to $N_{res}$ = 4 bits. Owing to the fact that swap module $B_{s1}$ is such as to perform only a position swap, or permutation, of the input data bits (first format data) also output data $xs_1(t)$ (second format data) from swap module $B_{s1}$ will be represented in this example as a data having a resolution equal to $N_{res}$ = 4 bits.

In general, if digital signal $x_1$ data in input to swap module are each represented by $N_{res} = 2^n$ bits, the permutation scheme (indicated as $p_1$ in figure 3) may be in turn expressed as a data, or a coded word, that may take to $N_{res}!$ values, each may be represented with $N_{res}$ digits, each may be represented with n bits.

In the example shown in figure 3, at the clock cycle t input data is $x_1(t)$ = 0110 while output data is $xs_1(t)$ = 1001. In such instance the permutation scheme (referred to the input and output positions numbered as 0, 1, 2, 3) has the expression 2-3-0-1.

In practice, if the permutation scheme is expressed as 2-3-0-1, this is equal to say that swap module $B_{s1}$ performs a bit permutation such that:

- the bit having position 0 in input data becomes position 2 bit in output data;
- the bit having position 1 in input data becomes position 3 bit in output data;
- the bit having position 2 in input data becomes position 0 bit in output data; and
- the bit having position 3 in input data becomes position 1 bit in output data;

In more general terms, a swap module $B_{s1}$ equals functionally a combinatory logic operator S (or swap operator) for that is valid a relation of type:

$$\mathbf{B_{s1}(t) \; = \; S[x_1(t), \; p_1(t)] \; = \; Xs_1(t).} \qquad\qquad (1)$$

A property of such swap operator S is that the operator is reversible, therefore it exists the reverse operator $S^{-1}$ such that $x_1(t)=S^{-1}[xs_1(t), p_1(t)]$. Further, direct and reverse swap operations maybe carried out using the same S operator, applying two distinct permutation schemes (direct $p_1(t)$ and reverse $p^{-1}(t)$) linked each other by the bi-univocal relationship:

$$\mathbf{x_1(t)= \; S^{-1}[xs_1(t), \; p_1(t)]=S[xs_1(t), \; p^{-1}(t)].} \qquad\qquad (2)$$

A few examples of permutation scheme $p^1$ and related reverse schemes $p^{-1}$ are shown in the following table:

| $p^1$ | $p^{-1}$ |
|---|---|
| 1,2,3,0 | 3,0,1,2 |
| 1,0,2,3 | 1,0,2,3 |
| 2,1,3,0 | 3,1,0,2 |
| 1,3,0,2 | 2,0,3,1 |

In general, using a swap operator S for digital data transformation from a first to a second format is known. For instance, applying swap operators to digital data, in the specific field of data transmissions, and more particularly with the aim of reducing a bus switching activity, is described in the US patent application published as US 2004/0.201.505 A1.

Another important property of a swap operator S resides in the fact that given a positional bitwise logic operator $O_{p1}[d1(t),d2(t)]$, wherein $d1(t)$ and $d2(t)$ are data each represented on $N_{res}$ bits, the following property is valid:

$$S[O_{p1}[d1(t),d2(t)],p(t)]] =$$

$$= O_{p1}[S[d1(t),p(t)],S[d2(t),p(t)]] \quad , \quad (3)$$

wherein p(t) represents any swap sequence.

For instance, in case the positional bitwise logic operator $O_{p1}$ is the EX-OR operator, represented by $\oplus$, the above property translates itself in:

$$S[d1(t) \oplus d2(t)], p(t)]] =$$

$$= S[d1(t),p(t)] \oplus S[d2(t),p(t)]. \quad (4)$$

wherein p(t) represents any swap sequence.

Other examples of positional bitwise logic operators are the following: AND, NAND, OR, NOR, EX-NOR, etc... or any combination of said operators.

In case, as often occurs in the practice, input signal $x_1, ... , x_5$ data to be modified from the swap block $B_{swap}$ and more particularly swap units $B_{s1}$, $B_{s2}$, $B_{s3}$, $B_{s4}$, $B_{s5}$ are represented on a considerable number of bits (for instance 16) it may be advantageous to realize the swap operation such that it operates rigidly on M blocks of input data bit, wherein M is a greater than 1 integer, overall such as envisaged from the teachings of the above mentioned US patent application published as US 2004/0.201.505 A1. This allows advantageously, as will be explained better in the following, to reduce the permutation schemes $p_1(t),...,p_5(t)$ length and to reduce the number of trials to be performed at the remote processing unit R_PU in the permutation schemes $p_1(t),...,p_5(t)$ research operations. This is due to the fact that, as described in the abovementioned US patent application, in the case wherein the permutation schemes operate on single bits of the data to be processed having a resolution of $N_{res}$ bits, any of possible permutation schemes may be selected within a set of $N_{res}$! (factorial) possible permutation schemes, while in the case wherein one operates upon M groups of bits this may be selected among M! (factorial) possible permutation schemes. This allows to reduce considerably research operations computational complexity at the remote processing unit R_PU of the permutation schemes to be utilized by the local processing unit.

In a particularly advantageous embodiment, if each of the input signals to the swap block $B_{swap}$ shows stationarity characteristics (more preferably of strictly stationarity), it is possible to envisage for each $x_1,..., x_5$ input signals a dedicated permutation schemes group (or set) comprising a finite number W of permutation schemes to be utilized cyclically (i.e. repeatedly), for instance sequentially, for modifying the data format of said input signal. Further, in case $x_1,..., x_5$ input signals present modest stationarity characteristics, it is possible to envisage for each said $x_1,..., x_5$ signals an update of said sets of permutation schemes by the remote processing unit R_PU with an update frequency preferably much lower compared to the clock frequency of signals $x_1,..., x_5$ received in input to the swap block $B_{swap}$.

Referring to figure 2 scheme, processing means $B_{swap}$, $B_{form}$ of local processing unit L_PU further comprise an aggregation (beamforming) block $B_{form}$ for producing starting from signals $xs_1(t) ,..., xs_5(t)$ as processed by swap block $B_{swap}$ an aggregate signal $y_{beam}(t)$ having $N_{res}$ bits resolution data.

Advantageously, aggregation block $B_{form}$ produces such aggregate signal $y_{beam}$ applying a positional logic operator bitwise $O_{p1}$ upon corresponding bits of signals $xs_1(t), ..., xs_5(t)$ for producing a single bit

of the aggregate signal $y_{beam}$. In other words, for each, $N_{res}$ bits, data $xs_1(t), ... , xs_5(t)$ of input signals $xs_1, ... , xs_5$, beamforming block $B_{form}$ shall provide in output an aggregate signal $y_{beam}$ data $Y_{beam}(t)$ having a $N_{res}$ bits resolution and such that:

$$y_{beam}(t) = O_{p1}[xs_1(t),...,xs_5(t)]. \quad (5).$$

In a particularly advantageous embodiment, the positional logic operator $O_{p1}$ is the Boolean operator EX-OR (also called exclusive OR, also represented by symbol $\oplus$).

Only to make an example in this case, named $xs_1(t)(i)$, $xs_2(t)(i)$, $xs_3(t)(i)$, $xs_4(t)(i)$ $xs_5(t)(i)$ the i-th bits (with i comprised between 0 and $N_{res}-1$) of signals $xs_1, ..., xs_5$ at clock cycle t, aggregation block $B_{form}$ will be such to produce the i-th bit of aggregate signal $y_{beam}(t)$ at clock cycle t by computing:

$$y_{beam}(t)(i) = xs_1(t)(i) \oplus xs_2(t)(i) \oplus xs_3(t)(i) \oplus xs_4(t)(i) \oplus xs_5(t)(i)$$

$$=$$

$$= \sum_{\oplus}^{u} xs_u(t)(i) \qquad \text{con } u=1,\dots,5. \qquad (6)$$

Expressing previous relationship as a function of the signals $x_1(t)$, ..., $x_5(t)$ received in input from local processing unit L_PU and clearing index i, there shall be that the aggregate signal $y_{beam}(t)$ data at clock cycle t maybe written in the form:

$$y_{beam}(t) = \sum_{\oplus}^{u} S[x_u(t), p_u(t)] \qquad (7)$$

wherein $p_u(t)$ is the permutation scheme assigned at clock cycle t to digital signal $x_u(t)$ to modify said data format through swap block $B_{swap}$. As previously explained, permutation schemes $p_u(t)$, that represent in practice digital signatures, for the same signal $x_u$ may be repeated cyclically advantageously as clock t cycles vary. In that way, permutation sequences $p_u(t)$ may be used to be applied to the same signal from a set (associated to said signal) comprising a finite number W of possible sequences identified by the remote processing unit R_PU to modify, in practice to "sign", said signal. More generally, using a bitwise positional logic operator $O_{p1}$ in the aggregation block $B_{form}$ one shall have:

$$y_{beam}(t) = \sum_{O_{pl}}^{u} S[x_u(t), p_u(t)]. \qquad (8)$$

Referring to figure 1, in a particularly preferred embodiment, local processing unit L_PU is such as to send aggregate signal $y_{beam}$ thus obtained to remote processing unit R_PU using a digital modulation, such as for instance a QPSK modulation or a B-PSK modulation compliant to IEEE 802.14.5 standard.

Remote processing unit R_PU is such as to receive said aggregate signal $y_{beam}$ to decode it with the aim of extracting (that is detect) from it single signals $x_1$, ... , $x_5$ supplied in output by sensors $U_1$, ... , $U_5$ of sensors network 2, or more correctly, of extracting from $y_{beam}$ a more accurate as possible estimate of such $x_1$, ... , $x_5$ signals. For the present description purposes for an "estimate as accurate as possible" is meant an estimate having an accuracy level compatible with some predefined system requirements.

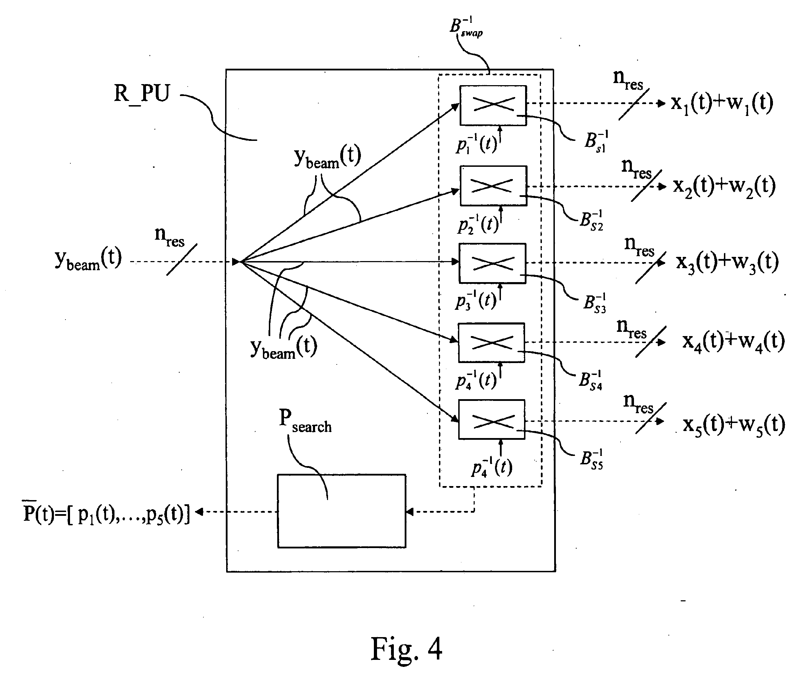

In figure 4 it is shown an exemplary block diagram of a particularly preferred embodiment of a remote processing unit R_PU.

Such remote processing unit R_PU comprises a reverse swap block $B_{swap}^{-1}$ completely similar to the above described swap block referring to the local processing unit L_PU and to figure 2.

In figure 4 only by way of example reverse swap block $B_{swap}^{-1}$ has been represented as comprising a plurality of reverse swap blocks $B_{s1}^{-1}, \dots, B_{s5}^{-1}$ each provided for processing the aggregate signal $y_{beam}$ for reconstructing a respective signal $x_1$, ..., $x_5$ provided in output from sensors $U_1$, ... , $U_5$ and transmitted to local processing unit L_PU in aggregate form.

In practice, reverse swap block $B_{swap}^{-1}$ operates in such a way to process aggregate signal $y_{beam}$ applying to said signal data swap operators that use reverse permutation schemes $p_1^{-1}, \dots, p_5^{-1}$ with respect to permutation schemes $p_1$, ..., $p_5$ used by swap block $B_{swap}$ in local processing unit L_PU.

As an example, to extract the u-th signal from the aggregate signal reverse swap block $B_{swap}^{-1}$ is such as to execute the following swap operation:

$$S\left[y_{beam}(t), p_u^{-1}(t)\right] = S\left[\sum_{\oplus}^{u} S\left[x_u(t), p_u(t)\right], p_u^{-1}(t)\right] =$$

$$\qquad (9)$$

$$= x_u(t) \oplus \sum_{\oplus}^{m \neq u} S\left[S\left[x_m(t), p_m(t)\right], p_u^{-1}(t)\right] = x_u(t) \oplus w_u(t).$$

From the above cited relationship, which refers to the specific case wherein the positional logic operator used to form signal $y_{beam}$ is the Boolean operator EX-OR, it is evident that extracted signal has been corrupted by a noise process due to all remaining signals that have contributed to form aggregate signal $y_{beam}$ at local processing unit L_PU. It should be observed that the above cited relationship as an example for the specific case of EX-OR operator is true also for other bitwise positional logic operators.

For this reason, the remote processing unit R_PU comprises a search block $P_{search}$ provided for searching permutation schemes, or better sets (or sequences) comprising a limited and restricted number W permutation schemes, to be transmitted to the local processing unit L_PU with the aim of reducing as far as possible, from each u-th signal to be extracted (i. e. to be revealed) from aggregate signal $y_{beam}$, the interference due to the process $w_u(t)$.

This in practice reduces itself to the search of permutation scheme sets such as to satisfy the following relationship:

$$w_u(t) = \left\|\sum_{\oplus}^{m \neq u} S\left[S\left[x_m(t), p_m(t)\right], p_u^{-1}(t)\right]\right\| \leq \varepsilon \qquad (10)$$

wherein $\varepsilon$ is an arbitrary small predefined value.

The above criteria correspond to minimize noise energy $E_u$ due to $w_u(t)$ process. Such energy $E_u$ is given by:

$$E_u = \sum_{i=0}^{N_{res}-1} \left|w_u(t)(i)\right|^2 \cdot 2^{2 \cdot i} , \qquad (11)$$

wherein $w_u(t)(0)$ is signal $w_u(t)$ least significant bit while $w_u(t)$ ($N_{res}-1$) is such signal most significant bit.

The search of the U permutation sequences sets (each sequence comprising W permutation schemes) according to the above noted criteria has a computational complexity such as $(N_{res}!)^{U \cdot W}$, wherein U is the signals number (in this example, U=5) that contribute to $y_{beam}$ aggregate signal formation. This applies in the case wherein the permutation schemes operate independently on each bit of the data signals provided in output from the sensors.

In the case in which instead the permutation schemes are such as to operate upon M bit sets of the data signals provided in output from the sensors, the U permutation sequences sets search according to above noted criteria has a computational complexity that reduces itself to $(M!)^{U \cdot W}$.

In a first embodiment, the permutation schemes sequences search problem may be solved in a heuristic way, through the study of the characteristics of the signals provided in output from sensors $U_1$, ... ,$U_5$ such as to minimize processes $w_u(n)$ noise spectral density. A shortcoming of this methodology is given from the high computational complexity and from the requested times to execute such heuristic search.

In an alternative and particularly advantageous embodiment, search block $P_{search}$ is such as to execute the permutation sequences schemes search operation in a sub-optimal way minimizing (or maximizing) a predefined cost function, that represents the search operation metric and that is given by the sum (or by the product, using logarithms) of an individual contributions plurality. In that case, in a particularly preferred embodiment, search block $P_{search}$ is such as to operate according to a Viterbi algorithm.

As it is known, such algorithm application, that represents an essential brick of telecommunications theory, is not limited to signals decoding and equalization, because such algorithm more generally represents a strategy to minimize (or maximize) a cost function based upon a system description in terms of inputs, states and outputs. Such system description is known in the field by the name of trellis diagram.

In a particularly advantageous embodiment, search block $P_{search}$ is such to realize a Viterbi algorithm according to the following operations:

a) casually generate a permutation schemes sequence (in practice, comprising W schemes) to be associated to first $x_1$ of U signals provided in output from sensors, and

For remaining U-1 signals $x_2, ... , x_5$ :

b) identify, operating signal by signal and through trials, respective permutation schemes sequences, such as to minimize for each (remaining) signal $x_u$ a given cost function (or metric) of energy $E_u$ (substantially as defined in formula 10) of interference (substantially as defined in formula 9) of the other signals whose permutation schemes have already been identified through Viterbi algorithm.

In this way "almost-orthogonal" permutation sequences schemes are obtained, that is permutation sequences schemes such to render, for each signal extracted from aggregate signal $y_{beam}$, the interference contribution at formula 10 as small as possible.

Preferably, Viterbi algorithm carried out by search block $P_{search}$ uses a fully connected trellis diagram. This equals saying that in Viterbi algorithm once selected a permutation scheme (start state) at t-1 cycle it will be possible to carry out a transition (that is carry out a trial) at t cycle towards any permutation scheme (arrival state) included the start one. This selection, compared to the use of a not fully connected trellis, does not limit the system degrees of freedom during the permutation schemes sets search. On the contrary, adopting a not fully connected trellis scheme may be a strategy to be used in case it is necessary to reduce the trials number to be carried out during the permutation schemes sequence.

Preferably, Viterbi algorithm depth D, that is a parameter whose meaning is known to a person skilled in the art, is significantly less with respect to sequences number W that are part of a same set of permutation sequences (e.g.: W= 32 and D=16).

In a particularly advantageous embodiment, remote processing unit R_PU, besides the search operations of permutation schemes sequences and of extraction of different signals from aggregate signal is such as to carry out post-processing operations on extracted signals. In fact, extracted signals from aggregate signal $y_{beam}$ may show replicas in the time domain (due to frequency domain sampling) and high frequency components that require a base band conversion and a subsequent low pass type filtering. Preferably, such filtering is carried out by a Butterworth filter or an elliptic type filter (not shown in figure 4 scheme).

Experimental tests and simulations have demonstrated the effectiveness, in power savings terms at the remote processing unit, as compared to known art methods.

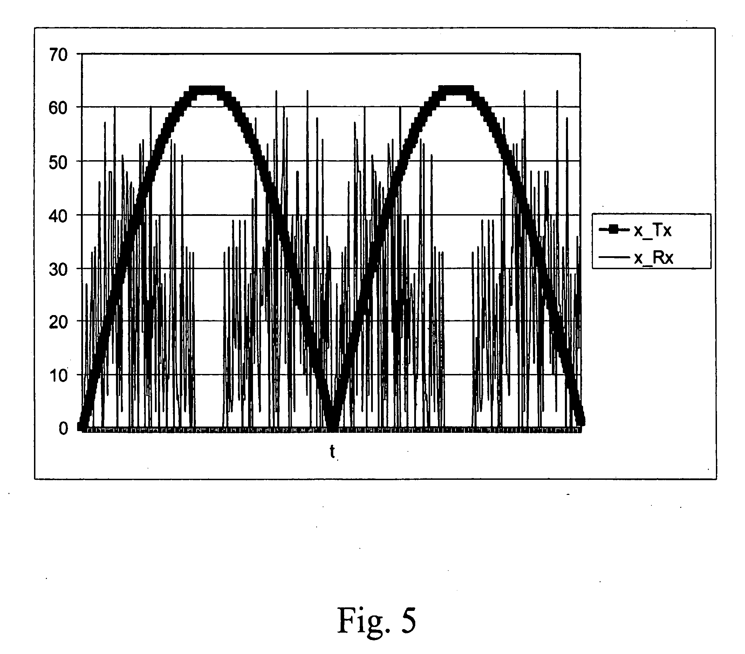

In figure 5 is shown the time pattern of a signal provided in output by one of the sensors (indicated as x-Tx) and of correspondent extracted signal (indicated as x_Rx) of remote processing unit R_PU aggregate signal. In this case, the transmitted signal is an absolute value sinusoidal waveform, while number U of signals that have contributed to signal aggregated $y_{beam}$ is equal to 4 (in practice, U=4). As may be noticed in figure 5, extracted signal x_Rx shows high frequency components.

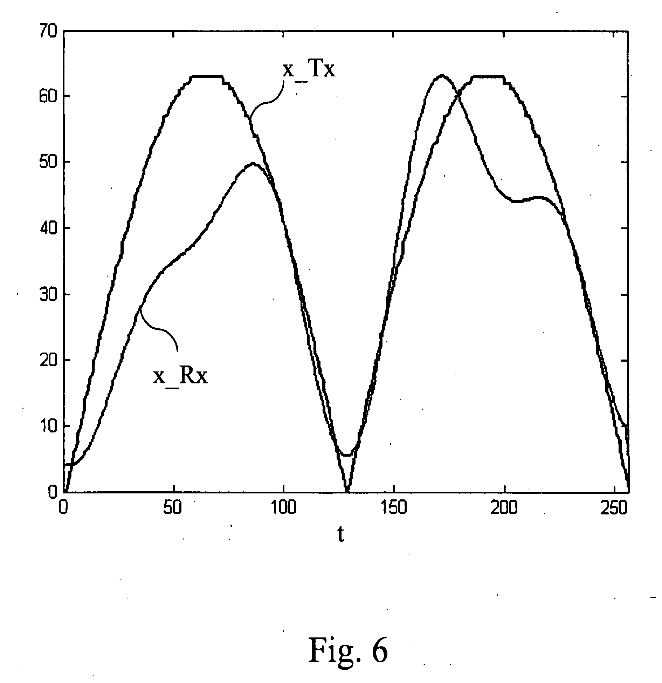

In the graph of figure 6, signal x_Tx is compared with extracted signal x_Rx following a filtering operation by a 8 poles low pass Butterworth filter with a normalized frequency of 0,000025.

In graph of figure 5 transmitted signal x_Tx is compared with extracted signal x_Rx after a filtering operation by an elliptic two poles low-pass filter having a normalized frequency equal to 0,025.

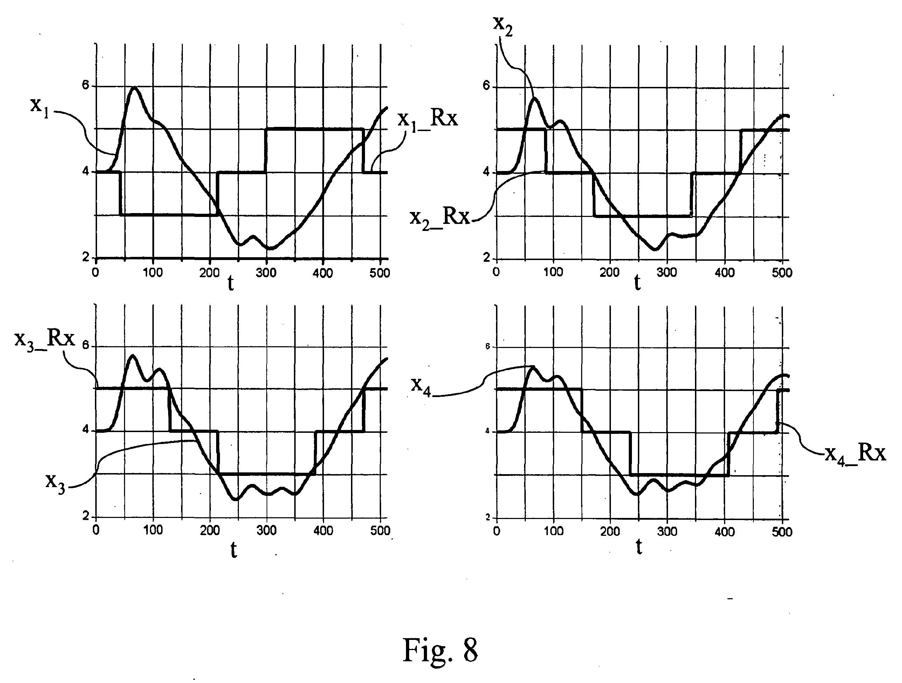

Finally, in figure 8 four signals are shown $x_1, ... , x_4$ provided in output from four sensors $U_1, ... , U_4$ (of a four sensors group) and corresponding signals $x_1\_Rx, ... , x_4\_Rx$ extracted from aggregate signal $y_{beam}$, filtered and detected.

Obviously, to the method and system of the present invention a person skilled in the art, with the aim to satisfy contingent requirements and specifications, may realize further modifications and variants, all necessarily within the invention protection scope, as defined by the following claims.

**Claims**

1. Processing method for forming an aggregate signal ($y_{beam}$) from a plurality of starting signals ($x_1, ... , x_5$), the method comprising the steps of:

- acquiring said starting signals ($x_1, ... , x_5$) , through respective sensors of a homogeneous set of sensors ($U_1, ... , U_5$) ;
- converting the acquired signals into respective digital signals ($x_1, ... , x_5$) having data each represented with a plurality of $N_{res}$ bits;

- processing the digital signals ($x_1$, ... ,$x_5$) for forming the aggregate signal ($y_{beam}$) ;
- **characterized in that** the processing step comprises the operations of:
- modifying the digital signals ($x_1$, ... ,$x_5$) changing the data format of each such digital signals from a first format to a second format, each data in the second format being obtained from a respective data in the first format by an operation of permuting the position of the $N_{res}$ bits within said data according to a permutation scheme ($p_1$, ... ,$p_5$) associated to that data and to the particular digital signal containing said data;
- forming aggregate signal ($y_{beam}$) obtaining data of said aggregate signal by a logic bitwise operator acting upon respective data of said modified digital signals.

2. Method according to claim 1, further comprising a step of identifying for each of said digital signals ($x_1$, ... ,$x_5$) a respective permutation schemes group ($p_1$, ... ,$p_5$) to be associated with said signal ($x_1$, ... ,$x_5$).

3. Method according to claim 2, wherein the permutation schemes ($x_1$, ... , $x_5$) of each of said sets are in a finite number, said modifying step being such as to use repetitively each set schemes for each respective signal to be modified.

4. Method according to claim 3, wherein said phase of modifying is such as to sequentially use said permutation schemes of each set.

5. Method according to claim 2, wherein said phase of identifying for each digital signal ($x_1$, ... ,$x_5$) the respective permutation schemes set, comprises an operation of minimizing an interference contribution due to the remaining digital signals in the decoding of said signal from said aggregate signal ($y_{beam}$)

6. Method according to claim 5, wherein said minimizing operation is based upon an energy minimization of said interference contribution.

7. Method according to claims 5 or 6, wherein said minimizing operation is carried out minimizing for each digital signal ($x_1$, ... ,$x_5$) a respective cost function through a Viterbi algorithm.

8. Method according to claim 1, wherein said data have a $N_{res}$ bits resolution, said method further comprising a phase of grouping the each data $N_{res}$ bits in M sub-groups of $N_{res}$/M bits each, and wherein said permutation operation is such to permute in each data the reciprocal position of complete M bits sub-groups.

9. Method according to any of preceding claims, wherein said aggregate signal ($y_{beam}$) is destined to be transmitted from a local processing unit (L_PU) spatially proximate to said sensors group to a remote processing unit (R_PU) spatially distal from said sensors group.

10. Method according to claims 2 and 9, wherein said identifying steep is carried out in said remote processing unit (R_ PU), said method further comprising a step of transmitting said permutation schemes identified from said remote processing unit (R_PU) to said local processing unit (L_PU).

11. Method according to claims 9 or 10, wherein said processing phase is carried out in said local processing unit (L_PU).

12. Method according to any of claims 9 to 11, wherein said local processing unit (L_PU) is comprised in a sensor ($U_5$) of said sensors group ($U_1$, ... ,$U_5$).

13. Method according to any of the preceding claims, wherein said logic bitwise operator is operator EX-OR.

14. Computer program product directly loadable in a digital computer memory and comprising software code portions such as to implement the processing method according to any of claims 1 to 12 when said product is executed on said digital computer.

15. Data acquisition system (1) comprising:

- a sensor network (2) comprising a homogeneous sensors group ($U_1$, ....$U_5$) each adapted to provide in output a respective acquired signal ($x_1$, ... ,$x_5$) ;
- analog to digital conversion means, adapted to convert said acquired signals in respective digital signals ($x_1$, ... ,$x_5$) having data represented on $N_{res}$ bits;
- a local processing unit (L_PU) adapted to receive said digital signals ($x_1$, ...,$x_5$) and comprising processing

means ($B_{swap}$, $B_{form}$) to form starting from said digital signals an aggregate signal ($y_{beam}$) ;
- a remote processing unit (R_PU) adapted to receive said aggregate signal ($y_{beam}$) wherefrom to extract said digital signals ($x_1$, ... , $x_5$) ;

**characterized in that** said processing means ($B_{swap}$, $B_{form}$) comprise:

- a swap block ($B_{swap}$) adapted to modify said digital signals ($x_1$, ... , $x_5$) changing the data format of each of said digital signals from a first format to a second format, each data in the second format having been obtained from a respective data in the first format by an operation of permuting the position of the $N_{res}$ bits on the basis of a permutation scheme ($p_1$, ... ,$p_5$) associated with said data and with the specific digital signal comprising said data;
- an aggregation block ($B_{form}$) to form said aggregate signal ($y_{beam}$) obtaining said aggregate signal data by a bitwise logical operator acting upon said respective digital signals modified data.

16. Data acquisition system (1) according to claim 15, wherein said logic operator is operator EX-OR.

17. Data acquisition system (1) according to claims 15 or 16, wherein the remote processing unit (R_PU) comprises a reverse swap block ( $B_{swap}^{-1}$ ) for processing the aggregate signal ($y_{beam}$) applying to said aggregate signal swap operators using reverse permutation schemes as compared to permutation schemes used by swap block ($B_{swap}$) in the local processing unit (L_PU).

18. Data acquisition system (1) according to any of claims 15 to 17, wherein said remote processing unit (R_PU) comprises a search block ($P_{search}$) adapted to identify for each of said signals ($x_1$, ... ,$x_5$) a respective permutation schemes set.

19. Data acquisition system (1) according to claim 18, wherein said search block is such as to implement a Viterbi algorithm for identifying said permutation schemes sets.

**Patentansprüche**

1. Verarbeitungsverfahren zum Bilden eines aggregierten Signals ($y_{beam}$) aus einer Mehrzahl von Ausgangssignalen ($x_1$, ..., $x_5$), wobei das Verfahren folgende Schritte umfasst:

- Erlangen der Startsignale ($x_1$, ..., $x_5$), durch entsprechende Sensoren einer homogenen Menge von Sensoren ($U_1$, ..., $U_5$);
- Konvertieren der erlangten Signale in entsprechende digitale Signale ($x_1$, ..., $x_5$), welche Daten aufweisen, die jeweils durch eine Mehrzahl von $N_{res}$ Bit repräsentiert werden;
- Verarbeiten der Digitalsignale ($x_1$, ..., $x_5$) zum Bilden des aggregierten Signals ($y_{beam}$);

**dadurch gekennzeichnet, dass** der Verarbeitungsschritt folgende Operationen umfasst:

- Modifizieren der Digitalsignale ($x_1$, ..., $x_5$), wobei das Datenformat jedes derartigen Signals aus einem ersten Format in ein zweites Format geändert wird, wobei jeder Datenwert im zweiten Format durch eine Operation des Permutierens der Stelle der $N_{res}$ Bit innerhalb der Daten gemäß einem Permutationsschema ($p_1$, ..., $p_5$) aus einem entsprechenden Datenwert in dem ersten Format erzielt wird, welches mit den Daten und mit dem die Daten enthaltenen speziellen Digitalsignal verknüpft ist;
- Bilden des aggregierten Signals ($y_{beam}$), welches Daten des aggregierten Signals durch einen auf die entsprechenden Daten des modifizierten Digitalsignals bitweise wirkenden logischen Operator erzielt.

2. Verfahren nach Anspruch 1, ferner einen Schritt des Identifizierens einer entsprechenden mit dem Signal ($x_1$, ..., $x_5$) zu verknüpfenden Permutationsschematagruppe ($p_1$, ..., $p_5$) für jedes der Digitalsignale ($x_1$, ..., $x_5$).

3. Verfahren nach Anspruch 2, wobei die Permutationsschemata ($x_1$, ..., $x_5$) von jeder der Mengen endlich an der Zahl sind, wobei der Modifizierungsschritt derart ist, dass er jedes Mengenschema wiederholt entsprechend für jedes zu modifizierende Signal verwendet.

4. Verfahren nach Anspruch 3, wobei die Phase des Modifizierens derart ist, dass die Permutationsschemata jeder Menge sequenziell verwendet werden.

5. Verfahren nach Anspruch 2, wobei die Phase des Identifizierens der entsprechenden Permutationsschematamenge für jedes Digitalsignal ($x_1$, ..., $x_5$) eine Operation des Minimierens eines durch die verbleibenden Digitalsignale beim Dekodieren des Signals aus dem aggregierten Signal ($y_{beam}$) bedingten Interferenzbeitrages beinhaltet.

6. Verfahren nach Anspruch 5, wobei die Minimierungsoperation auf einer Energieminimierung des Interferenzbeitrages basiert.

7. Verfahren nach Anspruch 5 oder 6, wobei die Minimierungsoperation zum Minimieren einer entsprechenden Kostenfunktion für jedes Digitalsignal ($x_1$, ..., $x_5$) durch einen Viterbi-Algorithmus ausgeführt wird.

8. Verfahren nach Anspruch 1, wobei die Daten eine Auflösung von $N_{res}$ Bit aufweisen, wobei das Verfahren ferner eine Phase des Gruppierens der $N_{res}$ Bit in M Untergruppen von jeweils $N_{res}$/M Bit aufweist, und wobei die Permutationsoperation derart ist, dass in jedem Datenwert die reziproke Position von vollständigen M Bit-Untergruppen permutieren.

9. Verfahren nach irgendeinem der vorstehenden Ansprüche, wobei das aggregierte Signal ($y_{beam}$) dafür bestimmt ist, von einer lokalen Verarbeitungseinheit (L_PU), die räumlich in der Nähe der Sensorgruppe ist, an eine entfernt angeordnete Verarbeitungseinheit (R_PU), die räumlich von der Sensorgruppe entfernt ist, übertragen zu werden.

10. Verfahren nach den Ansprüchen 2 und 9, wobei der Identifizierungsschritt in der entfernt angeordneten Verarbeitungseinheit (R_PU) ausgeführt wird, wobei das Verfahren ferner einen Schritt des Übertragens der identifizierten Permutationsschemata von der entfernt angeordneten Verarbeitungseinheit (R_PU) zu der lokalen Verarbeitungseinheit (L_PU) umfasst.

11. Verfahren nach Anspruch 9 oder 10, wobei die Verarbeitungsphase in der lokalen Verarbeitungseinheit (L_PU) ausgeführt wird.

12. Verfahren nach irgendeinem der Ansprüche 9 bis 11, wobei die lokale Verarbeitungseinheit (L_PU) in einem Sensor ($U_5$) der Sensorgruppe ($U_1$, ..., $U_5$) enthalten ist.

13. Verfahren nach irgendeinem der vorstehenden Ansprüche, wobei der bitweise logische Operator ein XOR-Operator ist.

14. Ein direkt in einen digitalen Computerspeicher ladbares und Softwarecodeteile zum Implementieren der Verarbeitungsverfahrens nach irgendeinem der Ansprüche 1 bis 12 im Falle der Ausführung des Produktes auf dem Digitalcomputer umfassendes Computerprogrammprodukt.

15. Datenerfassungssystem (1), aufweisend:

   - ein Sensornetzwerk (2) mit einer homogenen Sensorgruppe ($U_1$, ..., $U_5$) von denen jeder Sensor eingerichtet ist, am Ausgang ein entsprechendes erlangtes Signal ($x_1$,..., $x_5$) zu liefern;
   - eine Analog-/Digital-Wandlereinrichtung, die zum Konvertieren der erlangten Signale in entsprechende Digitalsignale ($x_1$,..., $x_5$) mit durch $N_{res}$ Bit repräsentierten Daten angepasst ist;
   - eine lokale Verarbeitungseinheit (L_PU), die zum Empfang der Digitalsignale ($x_1$, ..., $x_5$) angepasst ist und eine Verarbeitungseinrichtung ($B_{swap}$, $B_{form}$) zum Bilden eines aggregierten Signals ($y_{beam}$) ausgehend von den Digitalsignalen aufweist;
   - eine zum Entgegennehmen des aggregierten Signals ($y_{beam}$) angepasste entfernt angeordnete Verarbeitungseinheit (R_PU), um daraus die Digitalsignale ($x_1$,..., $x_5$) zu extrahieren;

   **dadurch gekennzeichnet, dass** die Verarbeitungseinrichtung ($B_{swap}$, $B_{form}$) umfasst:

   - einen zum Modifizieren der Digitalsignale ($x_1$, ..., $x_5$) angepassten Austauschblock ($B_{swap}$), der das Datenformat von jedem der Digitalsignale aus einem ersten Format in ein zweites Format ändert, wobei jeder Datenwert in dem zweiten Format durch eine Operation des Permutierens der Stelle der $N_{res}$ Bit auf der Basis eines Permutationsschemas ($p_1$, ..., $p_5$), das mit den Daten und dem spezifischen Digitalsignal, das die Daten enthält, verknüpft ist, aus einem entsprechenden Datenwert in dem ersten Format erzielt worden ist;
- einen Aggregationsblock ($B_{form}$) zum Bilden des aggregierten Signals ($y_{beam}$), welcher das aggregierte Signal durch einen bitweisen logischen Operator erzielt, der auf den entsprechenden modifizierten Digitalsignaldaten wirkt.

16. Datenerfassungssystem (1) nach Anspruch 15, wobei der logische Operator ein XOR-Operator ist.

17. Datenerfassungssystem (1) nach Anspruch 15 oder 16, wobei die entfernt angeordnete Verarbeitungseinheit (R_ PU) einen inversen Austauschblock ($B^{-1}_{swap}$) zum Verarbeiten des aggregierten Signals ($y_{beam}$) aufweist, auf das aggregierte Signal Austauschoperatoren anwendend, die im Vergleich zu den in der lokalen Verarbeitungseinheit (L_PU) durch den Austauschblock ($B_{swap}$) verwendeten Permutationsschemata inverse Permutationsschemata verwenden.

18. Datenerfassungssystem (1) nach irgendeinem der Ansprüche 15 bis 17, wobei die entfernt angeordnete Verarbeitungseinheit (R_PU) einen Suchblock ($P_{search}$) aufweist, der angepasst ist, für jedes der Signale ($x_1$, ..., $x_5$) eine entsprechende Permutationsschematamenge zu identifizieren.

19. Datenerfassungssystem (1) nach Anspruch 18, wobei der Suchblock derart beschaffen ist, dass er einen Viterbi-Algorithmus zum Identifizieren der Permutationsschematamengen implementiert.

## Revendications

1. Procédé de traitement destiné à former un signal composite ($y_{beam}$) à partir d'une pluralité de signaux de départ ($x_1$, ..., $x_5$), le procédé comprenant les étapes qui consistent :

   à acquérir lesdits signaux de départ ($x_1$, ..., $x_5$), par l'intermédiaire de capteurs respectifs d'un ensemble homogène de capteurs ($U_1$, ..., $U_5$) ;
   à convertir les signaux acquis en signaux numériques respectifs ($x_1$, ..., $x_5$) ayant des données représentées chacune par une pluralité de $N_{res}$ bits ;
   à traiter les signaux numériques ($x_1$, ..., $x_5$) pour former le signal composite ($y_{beam}$) ;
   **caractérisé en ce que** l'étape de traitement comprend les opérations consistant :

   à modifier les signaux numériques ($x_1$, ..., $x_5$), en changeant le format de données de chacun des signaux numériques de ce type d'un premier format à un deuxième format, chaque donnée dans le deuxième format étant obtenue à partir d'une donnée respective dans le premier format par une opération de permutation de la position des $N_{res}$ bits dans ladite donnée selon un schéma de permutation ($p_1$, ..., $p_5$) associé à cette donnée et au signal numérique particulier contenant ladite donnée ;
   à former un signal composite ($y_{beam}$) en obtenant des données dudit signal composite par un opérateur logique au niveau du bit agissant sur des données respectives desdits signaux numériques modifiés.

2. Procédé selon la revendication 1, comprenant en outre une étape d'identification, pour chacun desdits signaux numériques ($x_1$, ... , $x_5$) , d'un groupe de schémas de permutation respectifs ($p_1$, ..., $p_5$) à associer avec ledit signal ($x_1$, ..., $x_5$) .

3. Procédé selon la revendication 2, dans lequel les schémas de permutation ($x_1$, ..., $x_5$) de chacun desdits ensembles sont en nombre fini, ladite étape de modification étant de nature à utiliser répétitivement chaque schéma d'ensemble pour chaque signal respectif à modifier.

4. Procédé selon la revendication 3, dans lequel ladite phase de modification est de nature à utiliser séquentiellement lesdits schémas de permutation de chaque ensemble.

5. Procédé selon la revendication 2, dans lequel ladite phase d'identification, pour chaque signal numérique ($x_1$, ..., $x_5$), de l'ensemble de schémas de permutation respectifs, comprend une opération de minimisation d'une contribution d'interférence due aux signaux numériques restants dans le décodage dudit signal à partir dudit signal composite ($y_{beam}$) .

6. Procédé selon la revendication 5, dans lequel ladite opération de minimisation est basée sur une minimisation d'énergie de ladite contribution d'interférence.

7. Procédé selon la revendication 5 ou 6, dans lequel ladite opération de minimisation est exécutée en minimisant, pour chaque signal numérique $(x_1, ..., x_5)$ , une fonction de coût respective à travers un algorithme de Viterbi.

8. Procédé selon la revendication 1, dans lequel lesdites données ont une résolution de $N_{res}$ bits, ledit procédé comprenant en outre une phase de groupement de chaque $N_{res}$ bit de données dans M sous-groupes de $N_{res}/M$ bits chacun, et dans lequel ladite opération de permutation est de nature à permuter, dans chaque donnée, la position réciproque de sous-groupes complets de M bits.

9. Procédé selon l'une des revendications précédentes, dans lequel ledit signal composite $(y_{beam})$ est destiné à être transmis depuis une unité de traitement local (L_PU) spatialement à proximité dudit groupe de capteurs à une unité de traitement à distance (R_PU) spatialement distale dudit groupe de capteurs.

10. Procédé selon les revendications 2 et 9, dans lequel ladite étape d'identification est réalisée dans ladite unité de traitement à distance (R_PU), ledit procédé comprenant en outre une étape de transmission desdits schémas de permutation identifiés de ladite unité de traitement à distance (R_PU) à ladite unité de traitement local (L_PU).

11. Procédé selon la revendication 9 ou 10, dans lequel ladite phase de traitement est réalisée dans ladite unité de traitement local (L_PU).

12. Procédé selon l'une des revendications 9 à 11, dans lequel ladite unité de traitement local (L_PU) est comprise dans un capteur $(U_5)$ dudit groupe de capteurs $(U_1, ... , U_5)$ -

13. Procédé selon l'une des revendications précédentes, dans lequel ledit opérateur logique au niveau du bit est un opérateur OU-EX.

14. Produit de programme informatique pouvant être directement chargé dans une mémoire d'ordinateur numérique et comprenant des parties de code logiciel pour mettre en oeuvre le procédé de traitement selon l'une des revendications 1 à 12 lorsque ledit produit est exécuté sur ledit ordinateur numérique.

15. Système (1) d'acquisition de données comprenant :

un réseau (2) de capteur comprenant un groupe homogène $(U_1,... , U_5)$ de capteurs, chacun adapté pour fournir en sortie un signal acquis respectif $(x_1, ..., x_5)$ ;
un moyen de conversion analogique-numérique, adapté pour convertir lesdits signaux acquis en signaux numériques respectifs $(x_1, ..., x_5)$ ayant des données représentées sur Nres bits ;
une unité de traitement local (L_PU) adaptée pour recevoir lesdits signaux numériques $(x_1, ..., x_5)$ et comprenant un moyen de traitement $(B_{swap}, B_{form})$ pour former, à partir desdits signaux numériques, un signal composite $(y_{beam})$ ;
une unité de traitement à distance (R_PU) adaptée pour recevoir ledit signal composite $(y_{beam})$ d'où doivent être extraits lesdits signaux numériques $(x_1, ..., x_5)$ ;
**caractérisé en ce que** ledit moyen de traitement $(B_{swap}, B_{form})$ comprend :

un bloc d'échange $(B_{swap})$ adapté pour modifier lesdits signaux numériques $(x_1, ..., x_5)$ en changeant le format de données de chacun desdits signaux numériques d'un premier format à un deuxième format, chaque donnée dans le deuxième format ayant été obtenue à partir d'une donnée respective dans le premier format par une opération de permutation de la position des $N_{res}$ bits sur la base d'un schéma de permutation $(p_1, ..., p_5)$ associé à ladite donnée, le signal numérique spécifique comprenant ladite donnée ;
un bloc d'agrégation $(B_{form})$ pour former ledit signal composite $(y_{beam})$ en obtenant lesdites données du signal composite par un opérateur logique au niveau du bit agissant sur lesdites données modifiées respectives des signaux numériques.

16. Système (1) d'acquisition de données selon la revendication 15, dans lequel ledit opérateur logique est un opérateur OU-EX.

17. Système (1) d'acquisition de données selon la revendication 15 ou 16, dans lequel l'unité de traitement à distance (R_PU) comprend un bloc d'échange inverse $(B^{-1}_{swap})$ pour traiter le signal composite $(y_{beam})$ en lui appliquant des opérateurs d'échange utilisant des schémas de permutation inverses par rapport à des schémas de permutation utilisés par un bloc d'échange (B$_{swap}$) dans l'unité de traitement local (L_PU).

**18.** Système (1) d'acquisition de données selon l'une des revendications 15 à 17, dans lequel ladite unité de traitement à distance (R_PU) comprend un bloc de recherche (P$_{search}$) adapté pour identifier, pour chacun desdits signaux (x$_1$, ..., x$_5$), un ensemble de schémas de permutation respectifs.

**19.** Système (1) d'acquisition de données selon la revendication 18, dans lequel ledit bloc de recherche est de nature à mettre en oeuvre un algorithme de Viterbi pour identifier lesdits ensembles de schémas de permutation.

Fig. 1

EP 1 845 660 B1

Fig. 2

$B_{s1}=S[x1(t), p1(t)]$

$x_1(t) = 0110$ →  0 1 1 0  →  1 0 0 1  →  $xs_1(t) = 1001$

$p_1(t) = 2,3,0,1$

Fig. 3

Fig. 4

EP 1 845 660 B1

EP 1 845 660 B1

Fig. 5

Fig. 6

Fig. 7

EP 1 845 660 B1

Fig. 8

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20040201505 A1

**Non-patent literature cited in the description**

- **A. WANG ; W. EINZELAM ; A. P. CHANDRAKAS-AN.** Energy Scalable Protocols for Battery-Operated MicroSensor network. *Kluwer Journal of VLSI Signal Processing,* November 2001, 223-239

- **SINHA et al.** Algorithmic transforms for efficient energy scalable computation. *LOW POWER ELECTRONICS AND DESIGN, 2000. ISLPEP '00 PROCEEDINGS OF THE 2000 INTERNATIONAL SYMPOSIUM,* 26 July 2000, 31-36